# EUROPEAN PATENT SPECIFICATION

(11) **EP 2 280 207 B1**
(45) Date of publication and mention of the grant of the patent: **14.03.2012**
(21) Application number: 10170023.5
(22) Date of filing: 19.07.2010
(51) Int. Cl.: F16L 9/12, F16L 11/127

(54) **Multilayer tube, particularly for industrial systems for the production and/or treatment of chemical compounds and the like**
Mehrlagiges Rohr, insbesondere für Industriesysteme zur Herstellung und/oder Behandlung von chemischen Zusammensetzungen und dergleichen
Tuyau multicouche, en particulier pour des systèmes industriels pour la production et/ou le traitement de composés chimiques et similaires

(30) Priority: 29.07.2009 IT PD20090228
(43) Date of publication of application: 02.02.2011
(73) Proprietor: Tubigomma Deregibus S.R.L., 35030 Saccolongo (PD) (IT)
(72) Inventor: Deregibus, Andrea, 35142, Padova (IT)
(74) Representative: Modiano, Micaela Nadia

(56) References cited:
- EP-A1- 1 580 475
- US-A- 4 394 705
- US-A1- 2005 051 226

## Description

The present invention refers to a multilayer tube, particularly for industrial systems for the production and/or treatment of chemical compounds and the like (see, for example, US-A-4 394 705).

Nowadays, in the field of production of tubes for industrial use, antistatic tubes are well known. These are multilayer tubes that have an electrically conducting layer that forms a surface that is electrically substantially equipotential and which envelops the duct for the fluid.
In particular, such tubes are used in environments where inflammable or explosive substances are treated or used, or for their transport, in order to prevent electrical discharges induced by electrostatic accumulation owing to rubbing of the tubes during their movement or by fluids flowing in them.
During the lifetime of antistatic tubes it is possible that the electrically conducting layer degrades or breaks, so interrupting the equipotential surface and, therefore, rendering the antistatic property of the tube null.
For reasons of safety, it is therefore necessary that during the lifetime of use of an antistatic tube its electrical conductibility be verifiable.
One type of known tube has two external layers in polyethylene filled with carbon so as to be electrically conducting. Of these the outer layer, which forms the outer surface of the tube, has a substantially uniform dispersion of portions in non-electrically conducting polyethylene, whitish in colour.
To verify the electrical conductibility of a tube of this type, two sections, for example at opposite ends, are connected by means of terminals to a device for measuring conductibility.
If no electrical potential difference is found between the two sections, or a potential difference is found that is not higher than a predefined tolerance threshold, this means that there is sufficient electrical conductibility to guarantee the safety of use of the tube, which therefore does not need to be replaced.
A pressing requirement in the field of production of antistatic tubes nowadays is to enable an easy and effective connection of the electrically conducting layer with a device for detecting its state, such connection needing to be able to be set up easily and substantially at any section of the tube, through its surface layers.
Furthermore, a very pressing requirement in the use of antistatic tubes, particularly in production plants of pharmaceutical and/or cosmetic products, is that such tubes are light in colour in order to allow cleaners to easily identify where they may be dirty, moreover giving the environment an aspect of cleanliness that dark-coloured tubes do not convey.
However, the type of tube described is substantially dark in colour, because its appearance is heavily influenced by the fact that the polyethylene filled with carbon gives it a typically blackish colouring.

The aim of the present invention is to provide a multilayer tube that satisfies the cited requirements by overcoming the drawbacks of the products currently known, so making it possible to obtain a tube that is light in colour and which allows an easy verification of its antistatic property.
Within this aim, an object of the invention is to devise a multilayer tube that is at least predominantly white or whitish.
Another object of the invention is to offer a multilayer tube that allows an easy electrical connection of its internal, conducting layer to a device to assess its conductibility, to be connected externally to the tube.
A further object of the invention is to offer a multilayer tube that is structurally simple and easy to use, and which can be produced at low cost.
This aim, as well as these and other objects which will become better evident hereinafter, are achieved by a multilayer tube, particularly for industrial systems for the production and/or treatment of chemical compounds and the like, in fluid form, comprising a plurality of layers of which at least
- one internal layer, which forms the duct for the fluid,
- an electrically conducting layer which is external to such internal layer, and
- a protection and finishing layer of such electrically conducting layer that it covers, forming the outer surface of such multilayer tube,
characterized in that such protection and finishing layer has a matrix made of electrically insulating material that is penetrated by electrically conducting bridges, such bridges being discrete and scattered substantially uniformly within such matrix, which separates them, isolating them electrically from each other, with respect to the protection layer, such bridges being further in contact with such electrically conducting layer and facing such external surface so as to form on such external surface points for electrical connection to such electrically conducting layer.

Further characteristics and advantages of the invention will become better apparent from the description of a preferred, but not exclusive, embodiment of the multilayer tube according to the invention, illustrated, by way of a non-limiting example, in the accompanying drawings, wherein:

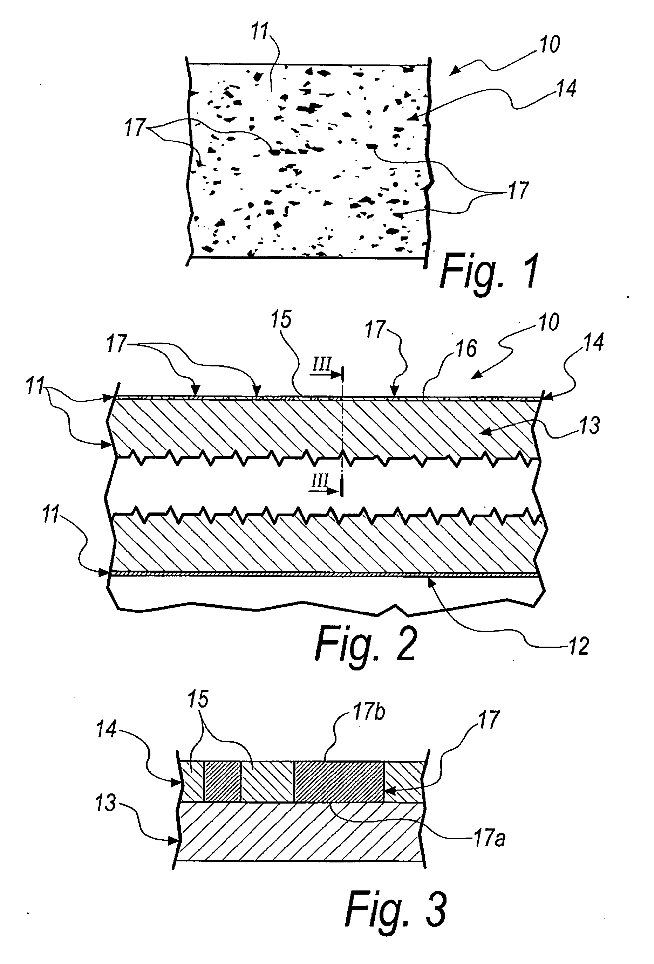

Figure 1 shows a section of tube, according to the invention, in plan view;
Figure 2 shows an enlarged detail of a multilayer tube, according to the invention, in a transverse sectional view;
Figure 3 shows a detail in sectional view of a multilayer tube, according to the invention, taken along the dotted line III-III in Figure 2.

With reference to the figures, the reference numeral 10 refers globally to a multilayer tube, particularly for industrial systems for the production and/or treatment of chemical compounds and the like, in fluid form, comprising a plurality of layers 11 of which at least
- one internal layer 12 which defines a duct for the fluid, preferably made of silicon or a suitable polymer, selected according to the fluid being handled, such as, for example, polytetrafluoroethylene,
- an electrically conducting layer 13, and
- a protection and finishing layer 14 of the electrically conducting layer 13 which it covers.
The protection and finishing layer 14 forms the outer surface 15 of the multilayer tube 10.
According to the invention, the multilayer tube 10 has a particular distinctive feature in that the protection and finishing layer 14 has a matrix 16 that is made of electrically insulating material and which is penetrated by bridges 17 which are electrically conductive.
The bridges 17 are discrete and are dispersed substantially uniformly within the matrix 16 which separates them and isolates them electrically from each other within such matrix.
The bridges 17, furthermore, at one end 17a of their ends are in contact, specifically electrical contact, with the electrically conducting layer 13, the second end 17b facing the external surface 15 so as to define points or regions for electrical connection on the external surface 15.
In this way, the bridges 17 constitute an electrical connection between the electrically conducting layer 13 and the external surface 15.
Advisably, the bridges 17 can equivalently
- adhere to the electrically conducting layer 13, at their first end 17a, and/or
- be fused with the electrically conducting layer 13, substantially to constitute a single body.
Furthermore, the bridges 17 and the electrically conducting layer 13 are preferably made of thermoplastic polymeric material that is filled with conductive particles, advantageously carbon.
The matrix 16 is advisably made of thermoplastic polymeric material which can be, according to the contingent requirements, the same thermoplastic polymeric material used to make the bridges 17 and the electrically conducting layer 13, or a different thermoplastic polymeric material.
Advantageously, the matrix 16, the bridges 17 and the electrically conducting layer 13 are made of the same thermoplastic polymeric material which advisably is polyethylene and, in particular, preferably is ultrahigh molecular weight polyethylene, also known by the acronym UHMWPE.
In addition, the matrix 16 has advisably a light colour shade with respect to the bridges 17 and, in particular, it is conveniently white or whitish.
The protection and finishing layer 14 advantageously has its outer surface 15 substantially smooth and glossy, so that the multilayer tube 10 has a strong tendency to remain clean and is also easy to clean, by contrasting the adhesion, upon it, of the dust or dirt with which it may come into contact.
Moreover, with its smooth external surface 15, the multilayer tube 10 slides easily, offering easy installation and moving.
To verify the antistatic nature of the multilayer tube 10 according to the invention, the checking terminals of a device to assess electrical conductibility can be attached to the ends.
These terminals, by engaging with the external surface 15 of the multilayer tube 10, define an electrical contact with the bridges 17, which are dispersed within the matrix 16, so creating an electrical connection with the electrically conducting layer 13.
By means of such device, it is thus possible to detect whether the electrical conductibility, of the multilayer tube 10, is within the prescribed tolerances.
Moreover, if such device finds an insufficient level of electrical conductibility, it is possible to identify a section of the conductive layer that has been damaged by moving one of the checking terminals along the multilayer tube 10, towards the other terminal.
In this way, the damaged section can be located based on the position of the moved terminal, in proximity to which the device finds a level of conductibility that falls within the limits that can be ascribed to a state of acceptable electrical conductibility of the multilayer tube 10.
In practice it has been found that the invention fully achieves the intended aim and objects by providing a multilayer tube that makes it possible to satisfy the above mentioned requirements and to overcome the drawbacks of the products known today, by being light in colour because the colour of its surface is determined by the colour of the matrix that dominates chromatically.
Furthermore, a multilayer tube according to the invention makes it possible to easily verify the effectiveness of its antistatic nature, as described.
A multi-layer tube according to the invention also allows an easy electrical connection of its internal, conducting layer to a device to assess its conductibility, to be connected externally to the tube by means of the electrically conducting bridges that penetrate the protection and finishing layer of the conducting layer.
Also, a multilayer tube according to the invention is structurally simple, easy to make, and can be made at relatively low cost.
In practice the materials employed, provided they are compatible with the specific use, and the dimensions and the contingent shapes, may be any according to requirements and to the state of the art in general, the invention, thus conceived, is susceptible of numerous modifications and variations, as long as they are within the scope of the appended claims.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A multilayer tube (10), particularly for industrial systems for the production and/or treatment of chemical compounds and the like in fluid form, comprising a plurality of layers (11), of which at least
- one internal layer (12), which forms the duct for the fluid,
- an electrically conducting layer (13) which is external to said internal layer (12), and
- a protection and finishing layer (14) of said electrically conducting layer (13), the protection and finishing layer (14) covering said electrically conducting layer (13) and forming the outer surface (15) of said multilayer tube (10), **characterized in that** said protection and finishing layer (14) has a matrix (16) made of electrically insulating material that is penetrated by electrically conducting bridges (17), said bridges (17) being discrete and scattered substantially uniformly within said matrix (16), which separates them, isolating them electrically from each other, with respect to the protection layer, said bridges (17) being furthermore in contact with said electrically conducting layer (13) and facing said external surface (15) so as to form on said external surface (15) points for electrical connection to said electrically conducting layer (13).

2. The multilayer tube according to claim 1, **characterized in that** said bridges (17) are chosen among
- bridges that adhere to said electrically conducting layer (13), or
- bridges that are fused with said electrically conducting layer (13).

3. The multilayer tube according to one or more of the preceding claims, **characterized in that** said bridges (17) and said electrically conducting layer (13) are made of thermoplastic polymeric material filled with conducting particles.

4. The multilayer tube according to one or more of the preceding claims, **characterized in that** said matrix (16) is made of thermoplastic polymeric material.

5. The multilayer tube according to one or more of the preceding claims 3 or 4, **characterized in that** said thermoplastic polymeric material is polyethylene.

6. The multilayer tube according to one or more of the preceding claims 3 to 5, **characterized in that** said thermoplastic polymeric material is ultrahigh molecular weight polyethylene, in acronym UHMWPE.

7. The multilayer tube according to claim 3, **characterized in that** said conducting particles are made of carbon.

8. The multilayer tube according to one or more of the preceding claims, **characterized in that** said matrix (16) has a light colour shade with respect to said bridges (17).

9. The multilayer tube according to one or more of the preceding claims, **characterized in that** said matrix (16) is substantially white.

10. The multilayer tube according to one or more of the preceding claims, **characterized in that** said protection and finishing layer (14) has said outer surface (15) substantially smooth and glossy.

## Patentansprüche

1. Mehrschichtenschlauch (10), insbesondere für Industriesysteme zur Produktion und/oder Behandlung chemischer Verbindungen und dergleichen in Fluidform, umfassend eine Mehrzahl von Schichten (11), von denen mindestens
- eine Innenschicht (12), die den Durchflusskanal für das Fluid bildet,
- eine elektrisch leitende Schicht (13), die außerhalb der Innenschicht (12) angeordnet ist, und
- eine Schutz- und Verschleißschicht (14) der elektrisch leitenden Schicht (13), die Schutz und Verschleißschicht (14), die besagte elektrisch leitende Schicht (13) bedeckt, und die Außenoberfläche (15) des Mehrschichtenschlauches (10) bildet, gegeben sind, **dadurch gekennzeichnet, dass** die Schutz- und Verschleißschicht (14) eine Matrix (16) aus elektrisch isolierendem Material aufweist, die von elektrisch leitenden Stegen (17) durchbrochen ist, wobei diese Stege (17) diskret und im wesentlichen gleichmäßig in der Matrix (16) verteilt angeordnet sind, welche sie trennt und bezüglich der Schutzschicht elektrisch voneinander isoliert, wobei die Stege (17) ferner in Kontakt mit der elektrisch leitenden Schicht (13) und der Außenoberfläche (15) zugewandt sind, um auf der Außenoberfläche (15) Punkte für den elektrischen Anschluss an die elektrisch leitende Schicht (13) zu bilden.

2. Mehrschichtenschlauch gemäß Anspruch 1, **dadurch gekennzeichnet, dass** die Stege (17) ausgewählt sind aus
- Stegen, die an der elektrisch leitenden Schicht (13) haften, oder
- Stegen, die mit der elektrisch leitenden Schicht (13) verschmolzen sind.

3. Mehrschichtenschlauch gemäß einem oder mehreren der vorangehenden Ansprüche, **dadurch gekennzeichnet, dass** die Stege (17) und die elektrisch leitende Schicht (13) aus thermoplastischem Polymermaterial gemacht sind, das mit leitenden Partikeln gefüllt ist.

4. Mehrschichtenschlauch gemäß einem oder mehreren der vorangehenden Ansprüche, **dadurch gekennzeichnet, dass** die Matrix (16) aus thermoplastischem Polymermaterial gemacht ist.

5. Mehrschichtenschlauch gemäß einem oder mehreren der vorangehenden Ansprüche 3 oder 4, **dadurch gekennzeichnet, dass** das thermoplastische Polymermaterial Polyethylen ist.

6. Mehrschichtenschlauch gemäß einem oder mehreren der vorangehenden Ansprüche 3 bis 5, **dadurch gekennzeichnet, dass** das thermoplastische Polymerinaterial ulttahochrnolekulares Polyethylen ist, im Akronym UHMWPE.

7. Mehrschichtenschlauch gemäß Anspruch 3, **dadurch** gekenntzeichnet, dass die leitenden Partikel aus Kohlenstoff gemacht sind.

8. Mehrschichtenschlauch gemäß einem oder mehreren der vorangehenden Ansprüche, **dadurch gekennzeichnet, dass** die Matrix (16) im Verhältnis zu den Stegen (17) einen hellen Farbton aufweist.

9. Mehrschichtenschlauch gemäß einem oder mehreren der vorangehenden Ansprüche, **dadurch gekennzeichnet, dass** die Matrix (16) im Wesentlichen weiß ist.

10. Mehrschichtenschlauch gemäß einem oder mehreren der vorangehenden Ansprüche, **dadurch gekennzeichnet, dass** die Schutz- und Verschleißschicht (14) eine im Wesentlichen glatte und glänzende Außenoberfläche (15) aufweist.

## Revendications

1. Tube à plusieurs couches (10), destiné en particulier à des systèmes industriels pour la production et / ou le traitement de composés chimiques et 5similaires sous une forme de fluide, comprenant une pluralité de couches (11), dont au moins :
- une couche intérieure (12), qui forme le conduit du fluide ;
- une couche conductrice de manière électrique (13) qui est extérieure à ladite couche intérieure (12) ; et
- une couche de protection et de finition (14) de ladite couche conductrice de manière électrique (13), la couche de protection et de finition (14) couvrant ladite couche conductrice de manière électrique (13) et formant la surface extérieure (15) dudit tube à plusieurs couches (10), **caractérisé en ce que** ladite couche de protection et de finition (14) présente une matrice (16) réalisée dans un matériau isolant de manière électrique qui est pénétrée par des ponts conducteurs de manière électrique (17), lesdits ponts (17) étant discrets et diffusés de manière sensiblement uniforme dans ladite matrice (16), qui les sépare, en les isolant de manière électrique les uns des autres, par rapport à la couche de protection, lesdits ponts (17) étant en outre en contact avec ladite couche conductrice de manière électrique (13) et faisant face à ladite surface extérieure (15) de façon à former sur ladite surface extérieure (15) des points pour une connexion électrique avec ladite couche conductrice de manière électrique (13).

2. Tube à plusieurs couches selon la revendication 1, **caractérisé en ce que** lesdits ponts (17) sont sélectionnés dans le groupe constitué par :
- des ponts qui adhèrent à ladite couche conductrice de manière électrique (13) ; ou
- des ponts qui sont fondus avec ladite couche conductrice de manière électrique (13).

3. Tube à plusieurs couches selon l'une ou plusieurs des revendications précédentes, **caractérisé en ce que** lesdits ponts (17) et ladite couche conductrice de manière électrique (13) sont réalisés dans un matériau polymère thermoplastique rempli de particules conductrices.

4. Tube à plusieurs couches selon l'une ou plusieurs des revendications précédentes, **caractérisé en ce que** ladite matrice (16) est réalisée dans un matériau polymère thermoplastique.

5. Tube à plusieurs couches selon l'une ou plusieurs des revendications 3 ou 4, **caractérisé en ce que** ledit matériau polymère thermoplastique est du polyéthylène.

6. Tube à plusieurs couches selon l'une ou plusieurs des revendications 3 à 5, **caractérisé en ce que** ledit matériau polymère thermoplastique est un polyéthylène à poids moléculaire ultra-haut, dont l'acronyme est UHMWPE (UltraHigh Molecular Weight PolyEthylene).

7. Tube à plusieurs couches selon la revendication 3, **caractérisé en ce que** lesdites particules conductrices sont constituées de carbone.

8. Tube à plusieurs couches selon l'une ou plusieurs des revendications précédentes, **caractérisé en ce que** ladite matrice (16) présente une nuance de couleur légère en ce qui concerne lesdits ponts (17).

9. Tube à plusieurs couches selon l'une ou plusieurs des revendications précédentes, **caractérisé en ce que** ladite matrice (16) est sensiblement blanche.

10. Tube à plusieurs couches selon l'une ou plusieurs des revendications précédentes, **caractérisé en ce que** ladite couche de protection et de finition (14) présente ladite surface extérieure (15) sensiblement lisse et brillante.
